# EUROPÄISCHE PATENTSCHRIFT

(11) **EP 3 542 609 B1**
(45) Veröffentlichungstag und Bekanntmachung des Hinweises auf die Patenterteilung: **10.03.2021**
(21) Anmeldenummer: 19151760.6
(22) Anmeldetag: 15.01.2019
(51) Int. Cl.: A01D 41/12

(54) **MÄHDRESCHER MIT UMHAUSTEM EINZUGSKANAL**
COMBINE HARVESTER WITH ENCLOSED INLET CHANNEL
MOISSONNEUSE-BATTEUSE POURVUE DE CANAL D'ENTRÉE RECOUVERT

(30) Priorität: 19.03.2018 DE 102018002197
(43) Veröffentlichungstag der Anmeldung: 25.09.2019
(73) Patentinhaber: CLAAS Selbstfahrende Erntemaschinen GmbH, 33428 Harsewinkel (DE)
(72) Erfinder: Burbank, Martin, 48231 Warendorf (DE)

(56) Entgegenhaltungen:
- BE-A- 704 525
- US-A- 5 322 472
- US-B2- 7 690 974

## Beschreibung

Die vorliegende Erfindung betrifft einen Mähdrescher mit einem umhausten Einzugskanal, über den Erntegut von einem Erntevorsatz zu einem Dreschwerk des Mähdreschers gefördert wird.

Beim Schneiden und Raffen des Ernteguts im Erntevorsatz werden in großer Menge Staub und Erntegutfragmente freigesetzt, die dazu neigen, sich auf dem Gehäuse des Einzugskanals abzusetzen. Insbesondere wenn das abgesetzte Material Niederschlag ausgesetzt ist, kann es zu einer festen Schicht von beträchtlicher Dicke verbacken, die den Mähdrescher unnötig beschwert und dadurch zu erhöhtem Kraftstoffverbrauch führt und die außerdem die vertikale Schwenkbewegung des Erntevorsatzes und des Einzugskanals behindert, die zum Ausgleich von Bodenunebenheiten erforderlich ist.

Um die Ablagerung einer solchen Schicht auf dem Einzugskanalgehäuse zu verhindern, ist in US 7 690 974 B2 ein Schmutzabweiser in Form einer über dem Einzugskanalgehäuse federnd aufgehängten, nach vorne abschüssigen Matte vorgeschlagen worden. Material, das sich auf der Matte absetzt, wird durch die Schwingungen, zu denen die Matte von Bodenunebenheiten angeregt wird, zum Abrutschen gebracht und gelangt auf diesem Wege zunächst zurück in den Erntevorsatz und anschließend in den Einzugskanal.

Indem dieser herkömmliche Schmutzabweiser Platz zwischen dem Einzugskanalgehäuse und einer darüber angeordneten Fahrerkabine belegt, beeinträchtigt er die Schwenkbewegungsfreiheit des Einzugskanals in ähnlicher Weise wie die Schmutzschicht, die er verhindern soll. Außerdem ist der Schmutzabweiser nur wirksam, wenn seine Matte zum Erntevorsatz hin kontinuierlich abschüssig ist. Wenn der Erntevorsatz zu weit angehoben oder die Spannung der Matte zu niedrig ist, kann die Matte sowohl vom vorderen als auch vom hinteren Ende her zu einem dazwischenliegenden tiefsten Punkt abschüssig sein, und anstatt den Erntevorsatz zu erreichen, sammelt sich das Material am tiefsten Punkt der Matte, so dass dort wieder die Gefahr des Verbackens zu einer festen Schicht besteht.

Das Material, das von der Matte abrutscht, enthält neben Resten des Ernteguts auch eine große Menge Staub, die, wenn sie durch die Matte in den Erntevorsatz zurückgeleitet wird, von dort über den Einzugskanal ins Dreschwerk geleitet wird. Dieser Staub muss vom ausgedroschenen Korn abgeschieden werden. Die durch den Schmutzabweiser erhöhte Staubzufuhr stellt erhöhte Anforderungen an die Leistungsfähigkeit der auf das Dreschwerk folgenden Reinigungsvorrichtungen des Mähdreschers.

Der Staubanteil im dem Dreschwerk zugeführten Erntegut kann mit Hilfe eines Reinigungsgebläses verringert werden, das, wie in US 6 036 600 A beschrieben, auf einem Einzugskanalgehäuse sich quer zu dessen Förderrichtung erstreckend montiert ist, um staubbefrachtete Luft aus dem Einzugskanal abzusaugen und den Staub seitlich vom Einzugskanal wieder auszustoßen.

Damit das Reinigungsgebläse nicht die Vertikalbeweglichkeit des Einzugskanals einschränkt, darf es nicht zu nah an einem hinteren Ende des Einzugskanalgehäuses angeordnet sein. Dies führt aber dazu, dass hinter dem Gehäuse des Reinigungsgebläses ein Teil der Oberseite des Einzugskanalgehäuses vor Fahrtwind geschützt ist, so dass sich Pflanzenreste und Staub dort in großer Menge sammeln können. Es ist schwierig, dies mit dem aus US 7 690 974 B2 bekannten Schmutzabweiser zu verhindern, da das auf der Matte abrutschende Material über das Reinigungsgebläse hinweg zurück in den Erntevorsatz gelangen muss und die Neigung der Matte, durchzuhängen und einen lokal tiefsten Punkt zwischen ihrem vorderen und hinteren Ende zu bilden, umso größer ist, je weiter vorn am Einzugskanalgehäuse das Reinigungsgebläse angeordnet ist, andererseits aber eine Anbringung des Reinigungskanalgehäuses nahe dem hinteren Ende des Einzugskanalgehäuses dessen Schwenkbeweglichkeit einschränkt.

Aufgabe der Erfindung ist, einen Mähdrescher mit einem Einzugskanalgehäuse zu schaffen, bei dem die Gefahr der Bildung einer hinderlichen Schmutzschicht auf dem Einzugskanalgehäuse minimiert ist, ohne dass dies zu einer Einschränkung der Bewegungsfreiheit des Einzugskanalgehäuses führt.

Die Aufgabe wird gelöst, indem bei einem Mähdrescher mit einem Einzugskanalgehäuse, durch das ein Einzugskanal zum Fördern von Erntegut von einem Erntevorsatz zu einem Dreschwerk verläuft, ein Reinigungsgebläse angeordnet ist, um quer zur Förderrichtung des Einzugskanals über eine freiliegende Oberfläche des Einzugskanalgehäuses zu blasen und so Partikel, die sich auf der frei liegenden Oberseite ablagern können, seitwärts wegzublasen und ihre Ablagerung auf dem Einzugskanalgehäuse zu verhindern.

Das Reinigungsgebläse kann an einen Seitenbereich des Einzugskanalgehäuses angeschlossen sein, um Frischluft aus diesem Seitenbereich anzusaugen und über die Oberseite zu blasen.

Wenn das Reinigungsgebläse unmittelbar aus dem Einzugskanal ansaugt, können über das Reinigungsgebläse Staub und feine Erntegutbruchstücke noch vor Erreichen des Dreschwerks aus dem Mähdrescher entfernt werden. Andererseits sollte, um die Bildung einer Staub- oder Schmutzschicht auf der Oberseite des Einzugskanalgehäuses zu verhindern, die darüber geblasene Luft möglichst frei von Staub und Pflanzenresten sein. Deswegen ist der Seitenbereich vom Einzugskanal vorzugsweise durch eine Zwischenwand abgetrennt, die das Vordringen Von Staub und Pflanzenbruchstücken aus dem Einzugskanal in den Seitenbereich verhindert.

Ein solcher Seitenbereich kann zur Unterbringung eines Getriebes dienen, welches Förderwerkzeuge des Einzugskanals antreibt. Indem diese durch das Reinigungsgebläse einem kontinuierlichen Luftstrom ausgesetzt sind, kann der Ansammlung von Schmutz in dem Seitenbereich in einer die Funktion des Getriebes behindernden Menge verhindert werden.

Das Getriebe kann zweckmäßigerweise auch das Reinigungsgebläse antreiben.

Um Staub aus dem Einzugskanal zu entfernen, kann an der Oberseite des Einzugskanalgehäuses ein mit dem Einzugskanal kommunizierender Absaugkanal quer zur Förderrichtung verlaufen und ein Absauggebläse zum Absaugen von Luft und Staub aus dem Einzugskanal in dem Absaugkanal angeordnet sein. Ein solcher Absaugkanal bildet wie oben beschrieben eine Barriere für den Fahrtwind, so dass die Neigung für Staub und Pflanzenbruchstücke, sich auf einer freiliegenden Oberseite des Einzugskanalgehäuses abzusetzen, hinter dem Absaugkanal besonders hoch ist. Insbesondere hier kann das Reinigungsgebläse wirksam Abhilfe schaffen.

In einem besonders einfachen und robusten Aufbau umfassen das Absauggebläse und das Reinigungsgebläse auf einer gleichen Welle montierte Rotoren.

Damit vom Absaugkanal ausgestoßener Staub nicht vom Reinigungsgebläses angesaugt und wieder über das Einzugskanalgehäuse geblasen wird, sollte der Absaugkanal Vorzugsweise eine einzige Ausblasöffnung aufweisen, der an einem vom Absauggebläse abgewandten Ende des Absaugkanals angeordnet ist.

Um mit Hilfe des Reinigungsgebläses einen Luftstrom über dem Einzugskanalgehäuse zu erzeugen, der in gleicher Richtung verläuft wie der Luftstrom im Absaugkanal, gegen diesen aber in Förderrichtung versetzt ist, sollte das Reinigungsgebläse einen sich in der Förderrichtung erstreckenden Rohrabschnitt umfassen, der eine Rotorkammer des Reinigungsgebläses mit einer Ausblasöffnung verbindet.

Ferner sollte zwischen dem sich in Förderrichtung erstreckenden Abschnitt und der Ausblasöffnung zweckmäßigerweise noch ein gekrümmter Rohrabschnitt vorgesehen sein, um die ausgeblasene Luft quer zur Förderrichtung abzulenken.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1: eine schematische Seitenansicht eines Vorderteils eines Mähdreschers.
Fig. 2: eine perspektivische Ansicht eines teilweise zerlegten Schrägförderers und eines daran anschließenden Dreschwerkgehäuses des Mähdreschers.
Fig. 3: eine zweite perspektivische Ansicht des Schrägförderers und des Dreschwerkgehäuses.

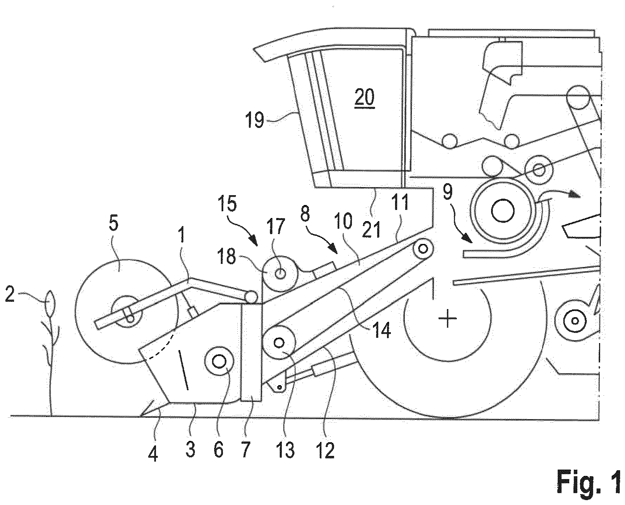

Der in Fig. 1 dargestellte Mähdrescher trägt an seiner Vorderseite ein austauschbares Schneidwerk, zum Beispiel ein Getreideschneidwerk 1, zum Schneiden und Sammeln von Erntegut 2. Das Schneidwerk 1 umfasst eine Bodenplatte 3, an deren Vorderkante Messer 4 zum Kappen der Halme des Ernteguts 2 quer zur Fahrtrichtung beweglich sind. Über der Vorderkante ist ein Rotor 5 angeordnet, um die gekappten Halme des Ernteguts 2 auf die Bodenplatte 3 zu schieben. Über der Bodenplatte 3 erstreckt sich eine Förderschnecke 6 mit zwei Gewindeabschnitten unterschiedlicher Händigkeiten, die durch ihre Drehung das Erntegut jeweils zur Mitte des Schneidwerks 1 schieben. Dort ist in einer Rückwand 7 eine Öffnung gebildet, an die ein Schrägförderer 8 angeschlossen ist, um das Erntegut 2 aus dem Schneidwerk 1 zu übernehmen und es einem Dreschwerk 9 im Inneren einer Karosserie des Mähdreschers zuzuführen.

Der Schrägförderer 8 ist schwenkbar an die Karosserie angelenkt, um eine Anpassung der Höhe des Schneidwerks 1 an Bodenunebenheiten zu ermöglichen. Der Schrägförderer 8 umfasst ein Gehäuse, das einen Einzugskanal 10 im Wesentlichen dicht umschließt und von dem in Fig. 1 jeweils eine obere und eine untere Wandplatte 11, 12 gezeigt sind. Zwischen den Wandplatten 11, 12, erstreckt sich im Einzugskanal 10 ein an Walzen 13 umgelenktes und angetriebenes Förderband 14.

An der die Oberseite des Einzugskanals 10 bildenden Wandplatte 11 sind benachbart zum Schneidwerk 1 ein Reinigungsgebläse 15 und ein in der Perspektive der Fig. 1 vom Reinigungsgebläse 15 verdecktes Absauggebläse 16 angeordnet. Beide Gebläse 15, 16 haben Rotoren, die auf einer gleichen Welle 17 montiert sind und von einer Rotorkammer 18 umgeben sind. Der Abstand der Welle 17 von einem stromabwärtigen Ende des Schrägförderers 8 ist so gewählt, dass, wenn der Schrägförderer 8 um eine zu diesem stromabwärtigen Ende benachbarte Achse hochschwenkt, die Rotorkammer 18 vor dem unteren Rand einer Windschutzscheibe 19 einer Fahrerkabine 20 zu liegen kommen kann, aber nicht an deren Boden 21 anstößt.

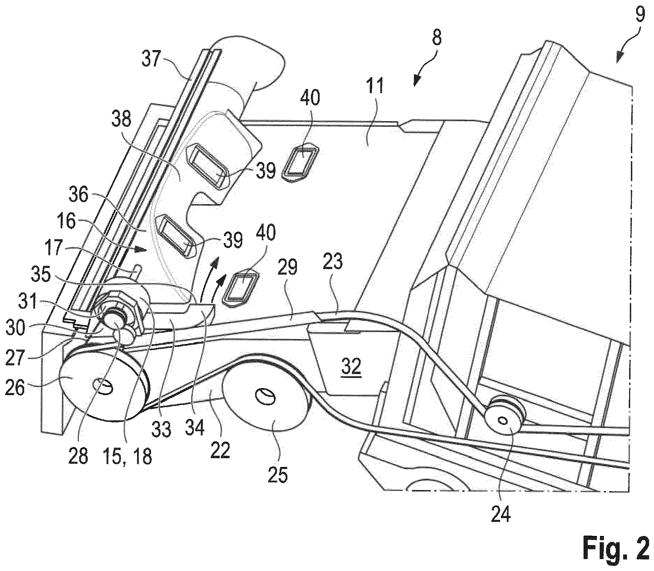

Figur 2 zeigt eine perspektivische Ansicht von Teilen des Schrägförderers 8 und des Gehäuses des Dreschwerks 9. Bleche der Karosserie des Mähdreschers, hinter denen im fertig zusammengebauten Zustand das Dreschwerk 9 verborgen ist, sowie innere Teile des Dreschwerks 9 sind in der Fig. fortgelassen. Zu sehen ist insbesondere die obere Randplatte 11 des Schrägförderers 8, unter der sich der Einzugskanal 10 erstreckt, sowie eine Zwischenwand 22, die den Einzugskanal 10 von der Fahrerkabine aus gesehen auf seiner linken Seite begrenzt und jenseits von der, in einem in Fig. 2 dem Betrachter zugewandten Seitenbereich 32 des Schrägförderers 8, ein Riementrieb mit einem endlos umlaufenden Riemen 23 angeordnet ist.

Der Riemen 23 ist außerhalb des in Fig. 2 dargestellten Ausschnitts über eine Riemenscheibe an den Verbrennungsmotor des Mähdreschers gekoppelt. Im in Fig. 2 sichtbaren Ausschnitt umschlingt er Riemenscheiben 24 des Dreschwerks 9 und 25, 26 des Schrägförderers B. Die Riemenscheibe 26 am vorderen Ende des Schrägförderers 8 ist auf einer gleichen Achse mit der vorderen Walze 13 des Schrägförderers montiert, um das Förderband 14 anzutreiben. Ein zweiter Riemen 27 umschlingt die Riemenscheibe 26 sowie eine weitere Riemenscheibe 28 oberhalb der Wandplatte 11. Der gesamte Riementrieb ist von Randplatten des Einzugskanalgehäuses des Schrägförderers 8 eingeschlossen, wobei diese Wandplatten in Figur 2 mit Ausnahme einer Wandplatte 29, die die Zwischenwand 22 nach oben verlängert und sich abgewinkelt über den Riemen 23 erstreckt, in Fig. 2 weggelassen sind, um den Riementrieb zeigen zu können.

Die Riemenscheibe 28 sitzt auf der Welle 17, die sich kontinuierlich durch die Gehäuse von Reinigungsgebläse 15 und Absauggebläse 16 erstreckt.

Das Gehäuse des Reinigungsgebläses 15 hat eine Seitenwand 30, die sich oberhalb der Wandplatte 11 im Wesentlichen in einer gleichen Ebene mit der Zwischenwand 22 erstreckt und einteilig mit dieser zusammenhängen kann. Rings um den Durchgang der Welle 17 durch die Seitenwand 30 sind Ansaugöffnungen 31 gebildet, über die das Reinigungsgebläse 15 Frischluft aus dem Seitenbereich 32 des Schrägförderers 8 ansaugt und dadurch eine Luftströmung im Seitenbereich 32 erzeugt, die es verhindert, dass sich dort größere Mengen an Staub und Pflanzenresten ansammeln.

Jenseits der Wandplatte 29 befindet sich die Rotorkammer 18 des Reinigungsgebläses 15. Diese ist im Wesentlichen zylindrisch mit einem tangential abzweigenden, sich auf der Wandplatte 11 entgegen der Förderrichtung erstreckenden Rohrabschnitt 33 und einen daran anschließenden, zur Mitte der Wandplatte 11 hin gekrümmten Rohrabschnitt 34. In der Rotorkammer 18 ist auf der Welle 17 ein an sich bekannter und hier nicht dargestellter Impeller montiert, dessen Drehung Frischluft durch die Ansaugöffnungen 31 ansaugt und über die Rohrabschnitte 33, 34 und eine Ausblasöffnung 35 wieder ausstößt. Infolge der Krümmung des Rohrabschnitts 34 ist die Strömungsrichtung der an der Ausblasöffnung 35 austretenden Luft quer zur Förderrichtung. Die Länge des Rohrabschnitts 33 ist so bemessen, dass der an der Ausblasöffnung 35 austretende Luftstrom frei über die hinter dem Absauggebläse 16 frei liegende Oberfläche der Wandplatte 11 streichen und so sämtliche Verschmutzungen forttragen kann, die sich anderenfalls im Windschatten des Absauggebläses 16 ablagern könnten.

Das Absauggebläse 16 hat ein Gehäuse 36, das sich an das Reinigungsgebläse 15 anschließend entlang der Vorderkante der Wandplatte 11 sowie über deren von der Fahrerkabine aus gesehen linken Rand hinaus erstreckt. Ein sich über der Wandplatte 11 erstreckender Teil des Gehäuses 36 hat einen in etwa parallelogrammförmigen Querschnitt, wobei die lange Basis des Parallelogramms durch die Wandplatte 11 gebildet ist und - in Fig. 2 durch das Gehäuse 36 verborgene - Öffnungen in der Wandplatte 11 eine Verbindung zum Einzugskanal 10 herstellen, über die das Absauggebläse 16 Staub und kleine Erntegutbruchstücke aus dem Einzugskanal 10 absaugt. Über einer kurzen Basis des Parallelogramms erstreckt sich eine Trittleiste 37, die von einem Benutzer bestiegen werden kann, um von dort aus die Windschutzscheibe 19 zu reinigen.

Der Teil des Gehäuses 36, der den linken Rand der Wandplatte 11 kreuzt, ist zylindrisch und enthält einen von der Welle 17 getragenen Axiallüfter, der den Luftstrom des Ansauggebläses antreibt. Ein äußeres Ende des Gehäuses 36 ist offen und abwärts gekrümmt, um den vom Absauggebläse 16 ausgestoßenen Staub bodenwärts zu blasen und von der Fahrerkabine 20 fernzuhalten.

An einer der Fahrerkabine 20 zugewandten Schrägseite 38 des parallelogrammförmigen Querschnitts des Gehäuses 36 sind zwei, hier jeweils durch Deckel verschlossene, Revisionsöffnungen 39 gebildet. Die Deckel können im Bedarfsfall entfernt werden, um über die Revisionsöffnungen 39 einen Zugang zum Inneren des Absauggebläses 16 und, über die darunterliegenden Öffnungen der Wandplatte 11, zum Einzugskanal 10 herzustellen, um dort bei Bedarf blockierende Fremdkörper entfernen zu können.

Entsprechende Revisionsöffnungen 40, die Zugang zum Förderband 14 gewähren, befinden sich auch in dem vom Reinigungsgebläse 15 überstrichenen freiliegenden Bereich der Wandplatte 11.

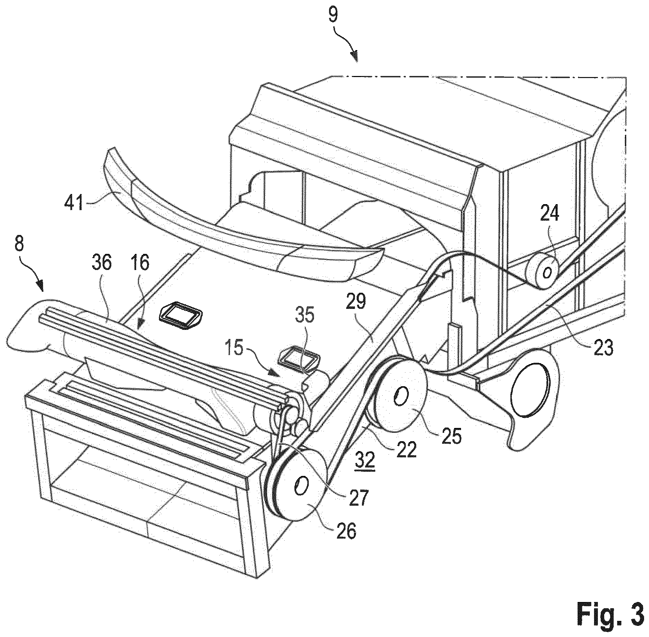

Die Schrägseite 38 ist in Querrichtung konkav gekrümmt. Wie in Fig. 3 deutlich wird, ist diese Krümmung komplementär zur Krümmung einer Vorderkante 41 des Bodens 21 der Fahrerkabine, um einerseits dem Gehäuse 36 des Absauggebläses 16 einen möglichst großen freien Querschnitt geben zu können und andererseits die Schwenkbewegungsfreiheit des Schrägförderers 8 nicht durch einen möglichen Kontakt des Gehäuses 36 mit der Vorderkante 41 einzuschränken.

### Bezugszeichenliste

- 1: Schneidwerk
- 2: Erntegut
- 3: Bodenplatte
- 4: Messer
- 5: Rotor
- 6: Förderschnecke
- 7: Rückwand
- 8: Schrägförderer
- 9: Dreschwerk
- 10: Einzugskanal
- 11: Wandplatte
- 12: Wandplatte
- 13: Walze
- 14: Förderband
- 15: Reinigungsgebläse
- 16: Absauggebläse
- 17: Welle
- 18: Rotorkammer
- 19: Windschutzscheibe
- 20: Fahrerkabine
- 21: Boden
- 22: Zwischenwand
- 23: Riemen
- 24: Riemenscheibe
- 25: Riemenscheibe
- 26: Riemenscheibe
- 27: Riemen
- 28: Riemenscheibe
- 29: Wandplatte
- 30: Seitenwand
- 31: Ansaugöffnung
- 32: Seitenbereich
- 33: Rohrabschnitt
- 34: Rohrabschnitt
- 35: Ausblasöffnung
- 36: Gehäuse
- 37: Trittleiste
- 38: Schrägseite
- 39: Revisionsöffnung
- 40: Revisionsöffnung
- 41: Vorderkante

## Patentansprüche

1. Mähdrescher mit einem Einzugskanalgehäuse, durch das ein Einzugskanal (10) zum Fördern von Erntegut von einem Erntevorsatz (1) zu einem Dreschwerk (9) verläuft, **gekennzeichnet durch** ein Reinigungsgebläse (15), das am Einzugskanalgehäuse angeordnet ist, um quer zur Förderrichtung des Einzugskanals (10) über eine freiliegende Oberseite des Einzugskanalgehäuses zu blasen.

2. Mähdrescher nach Anspruch 1, **dadurch gekennzeichnet, dass** das Einzugskanalgehäuse ein an einen Karosserie des Mähdreschers schwenkbar angelenkter Schrägförderer (8) ist.

3. Mähdrescher nach Anspruch 1 oder 2, **dadurch gekennzeichnet, dass** das Reinigungsgebläse (15) an einen Seitenbereich (32) des Einzugskanalgehäuses angeschlossen ist, um Frischluft aus dem Seitenbereich (32) anzusaugen.

4. Mähdrescher nach Anspruch 3, **dadurch gekennzeichnet, dass** der Seitenbereich (32) vom Einzugskanals (10) durch eine Zwischenwand (22) abgetrennt ist.

5. Mähdrescher nach Anspruch 1 und 4, **dadurch gekennzeichnet, dass** der Seitenbereich (32) ein Getriebe, insbesondere einen Riementrieb (23-27) zum Antreiben von Förderwerkzeugen (13, 14) des Einzugskanals (10) enthält

6. Mähdrescher nach Anspruch 5, **dadurch gekennzeichnet dass**, das Reinigungsgebläse (15) durch das Getriebe angetrieben ist.

7. Mähdrescher nach einem der vorhergehenden Ansprüche, **dadurch gekennzeichnet, dass** an der Oberseite des Einzugskanalgehäuses ein mit dem Einzugskanal (10) kommunizierendes Absauggebläse (16)zum Absaugen von Staub aus dem Einzugskanal (10)angeordnet ist und die Blasrichtung des Absauggebläses (16) quer zur Förderrichtung des Einzugskanals (10) orientiert ist.

8. Mähdrescher nach Anspruch 7, **dadurch gekennzeichnet, dass** das Absauggebläse (16) und das Reinigungsgebläse (15) auf einer gleichen Welle (17) montierte Rotoren umfassen.

9. Mähdrescher nach Anspruch 7 oder 8, **dadurch gekennzeichnet, dass** das Absauggebläse (16) ein Gehäuse (36) mit einer einzigen Ausblasöffnung aufweist, und dass die Ausblasöffnung an einem vom Reinigungsgebläse (15) abgewandten Ende des Gehäuses (36) angeordnet ist.

10. Mähdrescher nach einem der Ansprüche 7 bis 9, **dadurch gekennzeichnet, dass** das Reinigungsgebläse (15) einen sich in der Förderrichtung erstreckenden Rohrabschnitt (33) umfasst, der eine Rotorkammer (18) des Reinigungsgebläses (15) mit einer Ausblasöffnung (35) verbindet.

11. Mähdrescher nach Anspruch 10, **dadurch gekennzeichnet, dass** das Reinigungsgebläse (15) ferner einen gekrümmten Rohrabschnitt (34) zwischen dem sich in Förderrichtung erstreckenden Abschnitt (33) und der Ausblasöffnung (35) aufweist.

## Claims

1. A combine harvester having an intake passage housing, through which an intake passage (10) passes for conveying crop material from a harvesting header (1) to a threshing mechanism (9), **characterised by** a cleaning fan (15) arranged at the intake passage housing in order to blow transversely to the conveyor direction of the intake passage (10) over an exposed top side of the intake passage housing.

2. A combine harvester according to claim 1 **characterised in that** the intake passage housing is an inclined conveyor (8) pivotably mounted to a bodywork of the combine harvester.

3. A combine harvester according to claim 1 or claim 2 **characterised in that** the cleaning fan (15) is connected to a side region (32) of the intake passage housing to draw in fresh air from the side region (32).

4. A combine harvester according to claim 3 **characterised in that** the side region (32) is separated from the intake passage (10) by an intermediate wall (22).

5. A combine harvester according to claims 1 and 4 **characterised in that** the side region (32) contains a transmission, in particular a belt drive (23-27), for driving the conveyor tools (13, 14) of the intake passage (10).

6. A combine harvester according to claim 5 **characterised in that** the cleaning fan (15) is driven by the transmission.

7. A combine harvester according to one of the preceding claims **characterised in that** a suction fan (16) communicating with the intake passage (10) for sucking dust out of the intake passage (10) is arranged at the top side of the intake passage housing and the blowing direction of the suction fan (16) is oriented transversely relative to the conveyor direction of the intake passage (10).

8. A combine harvester according to claim 7 **characterised in that** the suction fan (16) and the cleaning fan (15) include rotors mounted on the same shaft (17).

9. A combine harvester according to claim 7 or claim 8 **characterised in that** the suction fan (16) has a housing (36) with a single blowing outlet opening and the blowing outlet opening is arranged at an end of the housing (36), that is remote from the cleaning fan (15).

10. A combine harvester according to one of claims 7 to 9 **characterised in that** the cleaning fan (15) includes a pipe portion (33) which extends in the conveyor direction and which connects a rotor chamber (18) of the cleaning fan (15) to a blowing outlet opening (35).

11. A combine harvester according to claim 10 **characterised in that** the cleaning fan (15) further has a curved pipe portion (34) between the portion (33) extending in the conveyor direction and the blowing outlet opening (35).

## Revendications

1. Moissonneuse-batteuse comprenant un carter de canal d'alimentation à travers lequel passe un canal d'alimentation (10) pour convoyer du produit récolté depuis un outil frontal de récolte (1) jusqu'à un système de battage (9), **caractérisée par** un ventilateur de nettoyage (15) qui est disposé sur le carter de canal d'alimentation pour souffler transversalement à la direction de convoyage du canal d'alimentation (10) sur une surface supérieure découverte du carter de canal d'alimentation.

2. Moissonneuse-batteuse selon la revendication 1, **caractérisée en ce que** le carter de canal d'alimentation est un convoyeur incliné (8) articulé de manière pivotante sur une carrosserie de la moissonneuse-batteuse.

3. Moissonneuse-batteuse selon la revendication 1 ou 2, **caractérisée en ce que** le ventilateur de nettoyage (15) est relié à une zone latérale (32) du carter de canal d'alimentation afin d'aspirer de l'air frais à partir de la zone latérale (32).

4. Moissonneuse-batteuse selon la revendication 3, **caractérisée en ce que** la zone latérale (32) est séparée du canal d'alimentation (10) par une cloison (22).

5. Moissonneuse-batteuse selon la revendication 1 et 4, **caractérisée en ce que** la zone latérale (32) contient une transmission, en particulier un entraînement à courroie (23-27) pour entraîner des organes de convoyage (13, 14) du canal d'alimentation (10).

6. Moissonneuse-batteuse selon la revendication 5, **caractérisée en ce que** le ventilateur de nettoyage (15) est entraîné par la transmission.

7. Moissonneuse-batteuse selon une des revendications précédentes, **caractérisée en ce que**, sur la surface supérieure du carter de canal d'alimentation, est disposé un ventilateur aspirant (16) communiquant avec le convoyeur (10) pour aspirer de la poussière à partir du convoyeur (10), et la direction de soufflage du ventilateur aspirant (16) est orientée transversalement à la direction de convoyage du convoyeur (10).

8. Moissonneuse-batteuse selon la revendication 7, **caractérisée en ce que** le ventilateur aspirant (16) et le ventilateur de nettoyage (15) incluent des rotors montés sur un même arbre (17).

9. Moissonneuse-batteuse selon la revendication 7 ou 8, **caractérisée en ce que** le ventilateur aspirant (16) comporte un carter (36) pourvu d'une unique sortie de soufflage, et **en ce que** la sortie de soufflage est disposée à une extrémité du carter (36) située à l'opposé du ventilateur de nettoyage (15).

10. Moissonneuse-batteuse selon une des revendications 7 à 9, **caractérisée en ce que** le ventilateur de nettoyage (15) inclut une portion tubulaire (33) qui s'étend dans la direction de convoyage et qui relie une chambre de rotor (18) du ventilateur de nettoyage (15) à une sortie de soufflage (35).

11. Moissonneuse-batteuse selon la revendication 10, **caractérisé en ce que** le ventilateur de nettoyage (15) comporte en outre une portion tubulaire courbée (34) entre la portion (33) s'étendant dans la direction de convoyage et la sortie de soufflage (35).
